# EUROPÄISCHE PATENTANMELDUNG

(11) **EP 4 707 081 A1**
(43) Veröffentlichungstag der Anmeldung: **11.03.2026**
(21) Anmeldenummer: 25199828.2
(22) Anmeldetag: 03.09.2025
(51) Int. Cl.: B60T 1/06, F16D 55/226, F16D 65/18, F16D 65/56

(54) **LAGERKUPPLUNGSRING, NACH- UND RÜCKSTELLER, SCHEIBENBREMSE, KUPPLUNGSSYSTEM**

(30) Priorität: 06.09.2024 DE 102024125604
(71) Anmelder: BPW Bergische Achsen Kommanditgesellschaft, 51674 Wiehl (DE)
(72) Erfinder: Klaas, Thomas, 51580 Reichshof (DE); Lenz, Andre, 51580 Reichshof (DE)
(74) Vertreter: DREISS Patentanwälte PartG mbB

(57) **Zusammenfassung**

Die Erfindung betrifft einen Lagerkupplungsring (10) zum Lagern einer Rückstellerwelle (120) einer Scheibenbremse, wobei der Lagerkupplungsring (10) sich um eine Ringachse (12) erstreckt, wobei der Lagerkupplungsring (10) umfasst: eine der Ringachse (12) abgewandte Ringmantelseite (20) und eine der Ringachse (12) zugewandte Ringinnenseite (22), eine an der Ringmantelseite (20) angeordnete radiale Fixierabstützung (26), eine an der Ringmantelseite (20) angeordnete erste axiale Anschlagfläche (28), eine an der Ringinnenseite (22) angeordnete und um die Ringachse (12) umlaufende erste Aufnahmefläche (34), eine an der Ringinnenseite (22) angeordnete zweite axiale Anschlagfläche (42), und mehrere axiale Kupplungsklauen (58), dadurch gekennzeichnet, dass der Lagerkupplungsring (10) ferner umfasst: eine an der Ringinnenseite (22) angeordnete und um die Ringachse (12) umlaufende zweite Aufnahmefläche (48), wobei die zweite Aufnahmefläche (48) beabstandet zur ersten Aufnahmefläche (34) ausgebildet ist, dass die Kupplungsklauen (58) die zweite Aufnahmefläche (48) abschnittweise axial verlängert, und dass der Lagerkupplungsring (10) einstückig ausgebildet ist.

## Beschreibung

Die Erfindung betrifft einen Lagerkupplungsring zum Lagern einer Rückstellerwelle einer Scheibenbremse, wobei der Lagerkupplungsring sich um eine Ringachse erstreckt. Der Lagerkupplungsring umfasst eine der Ringachse abgewandte Ringmantelseite und eine der Ringachse zugewandte Ringinnenseite, eine an der Ringmantelseite angeordnete radiale Fixierabstützung, eine an der Ringmantelseite angeordnete erste axiale Anschlagfläche, eine an der Ringinnenseite angeordnete und um die Ringachse umlaufende erste Aufnahmefläche, eine an der Ringinnenseite angeordnete zweite axiale Anschlagfläche, und mehrere axiale Kupplungsklauen. Die Erfindung betrifft ferner einen Nach- und/oder Rücksteller, eine Scheibenbremse und ein Kupplungssystem.

Aus der EP 0 531 321 B1, der WO 2015/117601 A1 und der DE 102 60 597 B4 sind Fahrzeug-Scheibenbremsen bekannt, die zum Ausgleich des betriebsbedingten Verschleißes an den Bremsbelägen und an der Bremsscheibe mit einer Nachstelleinrichtung versehen sind. Diese passt den Abstand zwischen den Bremsbelägen und der Bremsscheibe entsprechend dem zunehmenden Verschleiß sukzessive an, und hält so dieses sogenannte Lüftspiel in einem konstruktiv vorgegebenen Rahmen. Die Betätigung der Nachstelleinrichtung erfolgt über ein Antriebselement, welches in dem Gehäuse der Scheibenbremse drehbar auf einer zu der Drehachse der Bremsscheibe parallelen Achse angeordnet ist. Das Antriebselement wird durch die Bremszuspanneinrichtung der Scheibenbremse in Drehung versetzt, z. B. durch einen in dem Bremsgehäuse angeordneten Drehhebel, welcher die Bremskraft verstärkt. Das Antriebselement der Nachstelleinrichtung ist auf einer zentral angeordneten Welle drehgelagert. Diese ist an ihrem der Bremsscheibe abgewandten Ende mit Schlüsselflächen versehen, um durch Zurückdrehen der Welle die Nachstelleinrichtung wieder vollständig in die Ausgangsposition zurückzustellen. Dies erfolgt üblicherweise beim Austausch verbrauchter Bremsbeläge gegen neue Bremsbeläge.

Die Präzision und Zuverlässigkeit der Nachstellung ist wesentlich davon abhängig, dass kein Verkanten der beteiligten Elemente der Nachstelleinrichtung eintritt. Zu diesem Zweck ist bei der EP 0 531 321 B1 die Welle, auf der die Elemente der Nachstelleinrichtung angeordnet sind, so in dem Bremsgehäuse abgestützt, dass sie leichte Pendelbewegungen ausführen kann. Hierzu ist die Welle über ein kardanisches Drehlager in einer Öffnung des Bremsgehäuses abgestützt. Als kardanisches Drehlager dient eine Buchse aus einem inneren Stahlring, einem äußeren Stahlring sowie dazwischen angeordnetem, elastisch verformbarem Material.

Aus der DE 10 2016 105 611 B4 ist eine Zustelleinrichtung für eine Fahrzeug-Scheibenbremse sowie ein kardanisches Drehlager und ein Kupplungsring bekannt. Das kardanische Drehlager ist mehrteilig aufgebaut. Das Drehlager weist zwei Stahlringe, ein Gummi- oder Elastomerring und eine Dichtlippe auf, wobei der Gummi- oder Elastomerring und die Dichtlippe durch Vulkanisation mit den Stahlringen verbunden ist. Nachteilig ist der mehrschrittige Herstellungsprozess des Drehlagers und die insbesondere axiale Nachgiebigkeit für die Präzision beim Nachstellen. Ebenfalls nachteilig ist die kurze und nachgiebige Ausführung der Drehlagerung des kardanischen Drehlagers gegenüber der Welle, die ausschließlich über vier untereinander getrennte Gleitflächen realisiert ist. Der sich an die Klauen anschließende Längsabschnitt des Stahlrings ist gegenüber der Welle beabstandet bzw. springt unmittelbar nach den nicht freien Klauenenden mit einem umlaufenden Radius radial nach außen zurück. Der sich dadurch ergebene Raum zwischen Stahlring und Welle ist mit nachgiebigen Dichtmaterial gefüllt, stellt keine Aufnahmefläche dar und dient nur der Abdichtung.

Der Erfindung liegt die Aufgabe zugrunde, ein Lagerkupplungsring bereitzustellen, welcher einfach und schnell herstellbar und langlebiger ausgebildet ist.

Die der Erfindung zugrundeliegende Aufgabe wird gelöst durch einen Lagerkupplungsring mit den Merkmalen des Anspruchs 1. Der Lagerkupplungsring ist dadurch gekennzeichnet, dass der Lagerkupplungsring ferner eine an der Ringinnenseite angeordnete und um die Ringachse umlaufende zweite Aufnahmefläche aufweist, wobei die zweite Aufnahmefläche beabstandet zur ersten Aufnahmefläche ausgebildet ist. Ferner verlängern die Kupplungsklauen die zweite Aufnahmefläche abschnittweise axial, also parallel zur Ringachse. Zudem ist der Lagerkupplungsring einstückig und/oder monolithisch ausgebildet ist.

Die einstückige Ausbildung ermöglicht eine einfache und schnelle Herstellbarkeit. Die Anzahl der Prozessschritte wird reduziert. Aufgrund der zweiten um die Ringachse umlaufenden Aufnahmefläche wird eine größere Kontaktfläche für die Lagerung der Rückstellerwelle bereitgestellt und der Lagerkupplungsring weist eine höhere Stabilität und/oder Steifigkeit auf. Demnach wird einem Aufspreizen der Kupplungsklauen entgegengewirkt. Dies wirkt sich positiv auf die Genauigkeit der Lüftspieleinstellung aus.

Eine zentrische Ausnehmung im Lagerkupplungsring erstreckt sich entlang der Ringachse zwischen einer im montierten Zustand der Bremsscheibe zugewandten Bremsseite und einer im montierten Zustand der Bremsscheibe abgewandten Werkzeugseite.

Vorzugsweise sind die radiale Fixierabstützung und/oder die erste axiale Anschlagfläche und/oder die zweite axiale Anschlagfläche um die Ringachse umlaufend ausgebildet. Im Sinne der Erfindung ist unter "um die Ringachse umlaufend" zu verstehen, dass das jeweilige Element bzw. die jeweilige Fläche sich vollständig um 360° um die Ringachse erstreckt und zusammenhängend ausgebildet ist.

Vorzugsweise weist die Ringmantelseite und/oder die Ringinnenseite eine im Wesentlichen zylindrische Kontur auf. In der Kontur können eine oder mehrere Stufen vorgesehen sein.

Die erste Aufnahmefläche und/oder die zweite Aufnahmefläche sind vorzugsweise starr, insbesondere lagerfähig, ausgebildet.

Die radiale Fixierabstützung erstreckt sich vorzugsweise parallel zur Ringachse. Die erste axiale Anschlagfläche und/oder die zweite axiale Anschlagfläche erstrecken sich vorzugsweise senkrecht zur Ringachse.

Die Komponenten des Lagerkupplungsrings, wie die radiale Fixierabstützung, die erste axiale Anschlagfläche, die zweite axiale Anschlagfläche, die erste Aufnahmefläche und/oder die zweite Aufnahmefläche, sind vorzugsweise an dem Lagerkupplungsring angeformt.

Ein vorteilhafter Aspekt der Erfindung sieht vor, dass der Lagerkupplungsring als ein Drehteil oder als ein Sinterteil ausgebildet ist. Der Lagerkupplungsring ist vorzugsweise zumindest abschnittsweise insbesondere die radiale Fixierabstützung, die erste axiale Anschlagfläche, die zweite axiale Anschlagfläche, die erste Aufnahmefläche und/oder die zweite Aufnahmefläche, rotationssymmetrisch ausgebildet. Damit wird die Herstellbarkeit weiter vereinfacht. Die Kupplungsklauen sind aufgrund der um die Ringachse verlaufend getrennten Ausbildung nicht umlaufend, sondern vereinzelt ausgebildet.

Ein vorteilhafter Aspekt der Erfindung sieht vor, dass der Lagerkupplungsring aus Metall, insbesondere Aluminium oder einem aluminiumähnlichen oder einem aluminiumhaltigen Material, hergestellt ist und/oder besteht. Demnach wird eine besonders stabile und leichte Lagerung und Kupplung gewährleistet.

Ein vorteilhafter Aspekt der Erfindung sieht vor, dass die erste Aufnahmefläche einen ersten Aufnahmedurchmesser und die zweite Aufnahmefläche einen zweiten Aufnahmedurchmesser aufweist, und wobei der zweite Aufnahmedurchmesser größer als der erste Aufnahmedurchmesser ist. Demnach kann die zweite Aufnahmefläche an der Rückstellerwelle zur Anlage kommen. In dem die zweite Aufnahmefläche radial zur ersten Aufnahmefläche beabstandet ist, wird die Aufnahme eines Dichtmittels, insbesondere eines Radialwellendichtrings, zwischen der zweiten Aufnahmefläche und der Rückstellerwelle ermöglicht.

Ein vorteilhafter Aspekt der Erfindung sieht vor, dass in Bezug auf die Ringachse die erste Aufnahmefläche axial an die zweite Aufnahmefläche anschließt, und/oder wobei in Bezug auf die Ringachse die erste Aufnahmefläche und die zweite Aufnahmefläche radial beabstandet zueinander angeordnet sind. Aufgrund der axialen Nähe zwischen den Aufnahmeflächen kann ein besonders flach und kompakt bauender Lagerkupplungsring bereitgestellt werden.

Ein vorteilhafter Aspekt der Erfindung sieht vor, dass der Lagerkupplungsring einen die erste Aufnahmefläche und die zweite Aufnahmefläche und/oder den Fixierabschnitt verbindenden, insbesondere und senkrecht zur Ringachse verlaufenden, Verbindungsabschnitt mit einer parallel zur Ringachse verlaufenden Abschnittsbreite aufweist. Demnach sind die inneren Aufnahmeflächen und/oder eine der Aufnahmeflächen und die Fixierabstützung unmittelbar miteinander verbunden, was eine höhere relative Genauigkeit im Nachstellprozess mit sich bringt. Ein axiales Verschieben zwischen den inneren Aufnahmeflächen und der äußeren Fixierabstützung wird so entgegengewirkt.

Ein vorteilhafter Aspekt der Erfindung sieht vor, dass die Kupplungsklauen eine senkrecht zur Ringachse verlaufende Klauenbreite aufweisen, und wobei die Abschnittsbreite des Verbindungsabschnitts größer als die Klauenbreite ist. Demnach ist eine besonders stabile und steife Verbindung zwischen der ersten Aufnahmefläche und der zweiten Aufnahmefläche gewährleistet, wobei eine materialsparende Auslegung im Bereich der Kupplungsklauen vorgesehen ist. Demnach wird ein stabiler und leichter Lagerkupplungsring bereitgestellt.

Ein vorteilhafter Aspekt der Erfindung sieht vor, dass der Verbindungsabschnitt einen Verjüngungsabschnitt und/oder einen, insbesondere an den Verjüngungsabschnitt anschließenden, Stegabschnitt aufweist. Die Abschnittsbreite nimmt im Verjüngungsabschnitt vorzugsweise in Bezug auf die Ringachse nach radial außen hin ab. Die Abschnittsbreite ist im Stegabschnitt vorzugsweise konstant. Demnach wird eine stabile und materialsparende Anbindung der Kupplungsklauen an die Ringmantelseite gewährleistet.

Ein vorteilhafter Aspekt der Erfindung sieht vor, dass die erste axiale Anschlagfläche an die radiale Fixierabstützung anschließt, und/oder dass die zweite axiale Anschlagfläche an die erste Aufnahmefläche und/oder die zweite Aufnahmefläche anschließt. Die zweite axiale Anschlagfläche ist vorzugsweise zwischen der ersten Aufnahmefläche und der zweiten Aufnahmefläche angeordnet.

Ein vorteilhafter Aspekt der Erfindung sieht vor, dass die erste Aufnahmefläche eine parallel zur Ringachse verlaufende erste Aufnahmelänge und die zweite Aufnahmefläche eine parallel zur Ringachse verlaufende zweite Aufnahmelänge aufweist, wobei ein Verhältnis zwischen der ersten Aufnahmelänge und der zweiten Aufnahmelänge in einem Bereich zwischen 4:1 und 1:1, insbesondere zwischen 3,5:1 und 1,5:1, vorzugsweise zwischen 3:1 und 2:1, liegt.

Es ist vorteilhaft, wenn der Lagerkupplungsring ein Dichtmittel, insbesondere einen Radialwellendichtring mit einer Dichtlippe, aufweist. Das Dichtmittel, insbesondere der Radialwellendichtring, ist vorzugsweise an der ersten Aufnahmefläche und der zweiten axialen Anschlagfläche angeordnet. Vorzugsweise ist das Dichtmittel, insbesondere der Radialwellendichtring, separat zur ersten Aufnahmefläche und zur zweiten axialen Anschlagfläche ausgebildet.

Die der Erfindung zugrundeliegende Aufgabe wird ebenfalls gelöst durch einen Nach- und/oder Rücksteller mit den Merkmalen des Anspruchs 11. Die Erfindung ist gerichtet auf einen Nach- und/oder Rücksteller einer Scheibenbremse mit einem zuvor beschriebenen Lagerkupplungsring.

Ein vorteilhafter Aspekt der Erfindung sieht vor, dass der Nach- und/oder Rücksteller eine Rückstellerwelle aufweist, und wobei sich die Rückstellerwelle an den Kupplungsklauen, insbesondere deren Innenseite, und am zweiten Aufnahmeabschnitt, insbesondere auf der zweiten Aufnahmefläche, abstützt. Demnach ist eine größere Lagerfläche bereitgestellt.

Ein vorteilhafter Aspekt der Erfindung sieht vor, dass die Nach- und/oder Rücksteller einen Radialwellendichtring mit einer Dichtlippe aufweist. Der Radialwellendichtring stützt sich vorzugsweise an der ersten Aufnahmefläche und gegenüber der zweiten axialen Anschlagfläche ab. Die Dichtlippe ist vorzugsweise in Bezug auf die Ringachse umlaufend auf der Rückstellerwelle angeordnet.

Es ist vorteilhaft, wenn der Radialwellendichtring sich gegen eine Ringscheibe abstützt, die wiederum durch einen Sicherungsring gesichert ist, welcher in einer Nut auf dem Außenumfang der Rückstellerwelle angeordnet ist. Zwecks umlaufender Begrenzungsfläche kann sich zwischen dem Radialwellendichtring und dem Sicherungsring eine Ringscheibe befinden.

Die der Erfindung zugrundeliegende Aufgabe wird ebenfalls gelöst durch eine Scheibenbremse mit den Merkmalen des Anspruchs 14. Die Erfindung ist gerichtet auf eine Scheibenbremse mit einem zuvor beschriebenen Nach- und/oder Rücksteller oder einem zuvor beschriebenen Lagerkupplungsring.

Ein vorteilhafter Aspekt der Erfindung sieht vor, dass die Scheibenbremse ein Bremssattelgehäuse aufweist, und wobei sich der Lagerkupplungsring in Bezug auf die Ringachse radial außen gegenüber dem Bremssattelgehäuse, insbesondere ausschließlich, über die Fixierabstützung axial reibschlüssig und/oder über die erste axiale Anschlagfläche axial formschlüssig abstützt.

Das Bremssattelgehäuse weist vorzugsweise eine Öffnung auf, durch welche der Nach- und Rücksteller einbringbar ist. Die Öffnung ist vorzugsweise mittels einer Kappe verschließbar, wobei die Kappe vorzugsweise mittels einer Gewindeverbindung mit dem Gehäuse verbindbar ist. Die Kappe setzt vorzugsweise ein weiteres Dichtmittel, insbesondere einen O-Ring, in einer Gehäusefase der Öffnung fest, welche so die Kappe und das Gehäuse abdichtet.

Die der Erfindung zugrundeliegende Aufgabe wird ebenfalls durch ein Kupplungssystem mit den Merkmalen des Anspruchs 16 gelöst. Das Kupplungssystem umfasst einen zuvor beschriebenen Lagerkupplungsring und einen Gegenkupplungsring. Der Gegenkupplungsring weist vorzugsweise Gegenklauen auf, welche zu einer axial beweglichen und drehfesten Verbindung mit den Kupplungsklauen des Lagerkupplungsrings zusammenwirken. Der Lagerkupplungsring weist vorzugsweise einen zweiten Aufnahmeabschnitt auf, wobei die zweite Aufnahmefläche durch den zweiten Aufnahmeabschnitt gebildet wird.

Weitere Vorteile, Merkmale und Einzelheiten ergeben sich aus der nachfolgenden Beschreibung, in der unter Bezugnahme auf die Zeichnung verschiedene Ausführungsbeispiele der Erfindung dargestellt sind. Dabei können die in den Ansprüchen und der Beschreibung genannten Merkmale jeweils einzeln für sich oder in beliebiger Kombination erfindungswesentlich sein.

Es zeigen:
- Fig. 1: eine Ansicht auf eine Fahrzeug-Scheibenbremse senkrecht zur Bremszuspannachse;
- Fig. 2: einen Längsschnitt durch die mit einer Nachstelleinrichtung versehene Fahrzeug-Scheibenbremse entlang der Bremszuspannachse gemäß Fig. 1;
- Fig. 3: eine Detailansicht des Längsschnitts des Lagerkupplungsrings der Nachstelleinrichtung gemäß Fig. 2;
- Fig. 4: eine Explosionsansicht des Kupplungssystems der Nachstelleinrichtung gemäß Fig. 2;
- Fig. 5: eine Explosionsansicht der Einzelteile der Nachstelleinrichtung gemäß Fig. 2; und

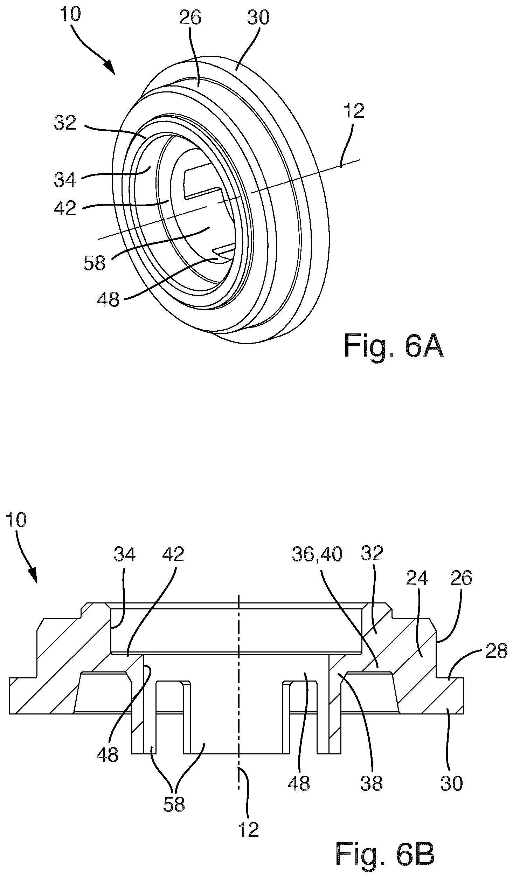

- Fig. 6A-B: zweite weitere Ansichten des Lagerkupplungsrings des Kupplungssystems gemäß Fig. 4.

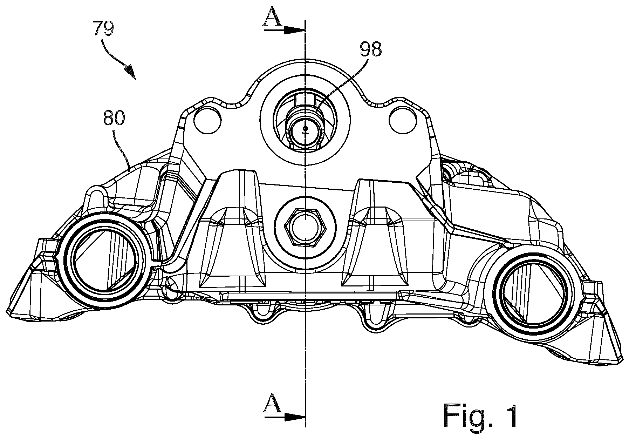

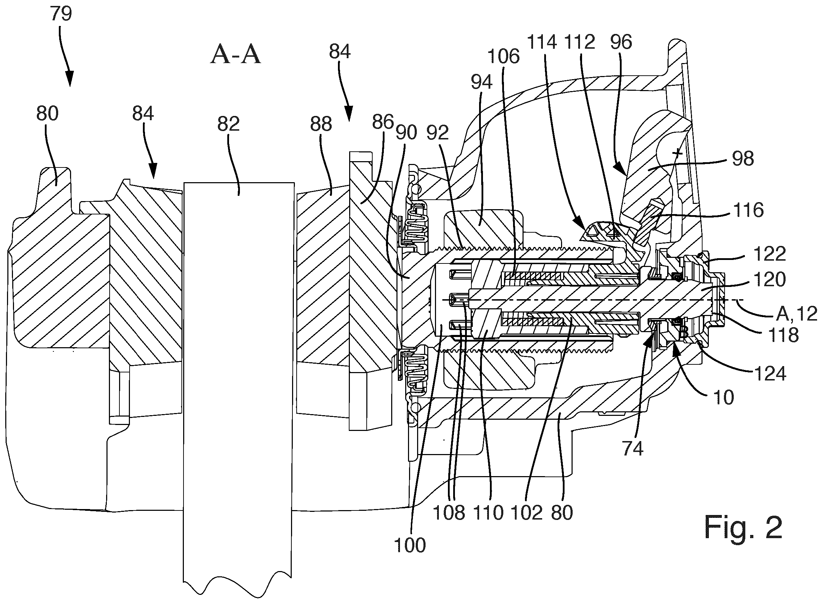

Fig. 1 und Fig. 2 zeigen in einer Übersichtsdarstellung eine druckluftbetätigte Scheibenbremse 79 mit einer integrierten Vorrichtung zum Nachstellen des verschleißbedingten Lüftspiels der Scheibenbremse 79. Eine solche Vorrichtung kommt zum Beispiel in einer für Nutzfahrzeuge bestimmten Gleitsattel-Scheibenbremse zum Ausgleich des mit dem Fahrbetrieb einhergehenden Bremsbelagverschleißes, aber auch des Verschleißes an der Bremsscheibe 82, zum Einsatz.

Die Nachstelleinrichtung ist, zusammen mit Elementen der Bremszuspannung, in einem Bremsgehäuse 80 angeordnet, welches insbesondere der Bremssattel der Scheibenbremse sein kann.

Bestandteil der Scheibenbremse ist ferner die in Fig. 2 ausschnittsweise dargestellte, mit dem Fahrzeugrad verbundene Bremsscheibe 82, gegen die auf jeder ihrer beiden Seiten jeweils ein Bremsbelag 84 zur Anlage kommen kann. Der Bremsbelag 84 weist in üblicher Weise eine Belagrückenplatte 86 und den eigentlichen Reibbelag 88 auf.

Die unmittelbare Beaufschlagung des inneren Bremsbelags 84 mit Bremsdruck erfolgt durch einen gegen diesen inneren Bremsbelag 84 beweglichen Druckstempel 90, der bei der Bremsspannung gegen die Belagrückenplatte 86 dieses inneren Bremsbelags 84 anliegt. Der Druckstempel 90 steht in einer zur Übertragung der vollen Bremskräfte geeigneten Gewindeverbindung 92 mit einem Druckstück 94, welches längsbeweglich in dem Bremsgehäuse 80 angeordnet ist.

Gegen das Druckstück 94 ist ein Zuspannhebel 96 abgestützt. Der Zuspannhebel 96 ist auf einer zu den Bremsflächen der Bremsscheibe 82 parallelen Schwenkachse in dem Bremsgehäuse 80 gelagert, und er ist dem Druckstück 94 abgewandt mit einem Hebelarm 98 versehen. Gegen den Hebelarm 98 arbeitet das Kraftglied der Fahrzeugbremse. Bei einer druckluftbetätigten Scheibenbremse ist dieses Kraftglied ein Pneumatikzylinder, vorzugsweise ein Membranzylinder. Die von dem Kraftglied erzeugte Kraft wird über den Hebelarm 98 in ein Schwenken des Zuspannhebels 96 umgesetzt, wodurch es aufgrund der Hebelverhältnisse zu einem die Kraft des Kraftglieds verstärkenden Druck auf das Druckstück 94 kommt. Die Anordnung aus dem Kraftglied, der Hebelanordnung und dem Druckstück 94 bildet die Zuspanneinrichtung der Fahrzeugbremse.

Zur Druckverstärkung arbeitet der Zuspannhebel 96 als Exzenter. Bevorzugt ist die dargestellte, gabelförmige Bauart des Zuspannhebels 96. Bei dieser Bauart wird die Betätigungskraft und damit die Bremskraft zu gleichen Teilen und zu beiden Seiten der auf der Achse A zentral angeordneten Nachstelleinrichtung auf das Druckstück 94 übertragen.

In ungebremster Stellung existiert jeweils ein Abstand (Lüftspiel) zwischen der Bremsscheibe 82 und jedem der beiden Bremsbeläge 84, damit die Teile nicht aneinander schleifen. Zum Ausgleich des durch den Verschleiß an den Belägen und der Bremsscheibe 82 sich immer wieder vergrößernden Lüftspiels dient die Nachstelleinrichtung. Diese ist für eine einfache und kompakte Bauweise der Bremse zumindest teilweise in den zentral im Bremsgehäuse 80 angeordneten Druckstempel 90 integriert. Hierzu ist der Druckstempel 90 mit einem bremsscheibenabgewandt offenen Hohlraum 100 versehen. Der Bremsscheibe 82 zugewandt ist der Druckstempel 90 hingegen geschlossen.

Bestandteil der Nachstelleinrichtung ist ein Antriebselement 102, welches innerhalb des Bremsgehäuses 80 der Scheibenbremse 79 auf einer zu der Drehachse der Bremsscheibe 82 parallelen Achse A drehbar angeordnet ist. Das Antriebselement 102 ist während des Bremsvorgangs durch die Zuspanneinrichtung der Scheibenbremse 79 und insbesondere durch das Einwirken des Zuspannhebels 96 um die Achse A verdrehbar.

Bestandteile der Nachstelleinrichtung sind ferner ein auf derselben Achse A angeordnetes Nachstellelement 104, sowie ferner eine Übertragungseinrichtung zwischen Antriebselement 102 und Nachstellelement 104. Mittels der Übertragungseinrichtung ist das Nachstellelement 104 durch das Antriebselement 102 sukzessive in jeweils gleichsinnige Drehbewegungen versetzbar. Als Übertragungseinrichtung kommt hier eine Schlingfeder 106 zum Einsatz, die ebenfalls auf der Achse A angeordnet ist.

Das Nachstellelement 104 ist in Bezug auf den umgebenden Druckstempel 90 drehfest, jedoch axial beweglich. Zu diesem Zweck ist der Druckstempel 90 an seiner Innenseite mit Längsnuten 108 versehen, in denen außen an dem Nachstellelement 104 angeformte Vorsprünge oder Nasen 110 längsbeweglich geführt sind. Erreicht wird eine unverdrehbare Längsführung des Nachstellelements 104 relativ zu dem Druckstempel 90. Durch die in Längsrichtung relativ kurzen Nasen 110 kann eine bei der Bremszuspannung nicht vermeidbare leichte Schwenkbewegung ausgeglichen werden.

Das Antriebselement 102 ist in Längsrichtung der Achse A im Wesentlichen ortsfest, bezogen auf das Bremsgehäuse 80. Das Antriebselement 102 ist mit einem nach außen abstehenden Arm 114 versehen. Der Arm 114 bildet eine Kulisse 112 (Fig. 2), in die ein an dem Zuspannhebel 96 angeordneter Zapfen 116 eingreift. Die Kulisse 112 an dem Arm 114 und der Zapfen 116 bilden daher gemeinsam ein Getriebe, über das das Antriebselement 102 durch die Bewegung des Zuspannhebels 96 antreibbar ist. Das Verschwenken des Zuspannhebels 96 führt also zu einem Drehen des Antriebselement 102 um die Achse A. Dabei wird die axiale Antriebsbewegung in eine Drehbewegung gewandelt. Hierbei wirken nicht nur Kräfte in Rotationsrichtung, sondern auch ungewollte Axialkräfte, die in die Nachstelleinheit eingeleitet werden. Diese gilt es sicher abzustützen, ohne dass sich die Nachstellkomponenten dadurch axial verschieben.

Für eine insgesamt axiale Bauweise der Nachstelleinrichtung befinden sich sowohl das Antriebselement 102 als auch das Nachstellelement 104 auf einer zentral auf der Achse A angeordneten Rückstellerwelle 120. Die Rückstellerwelle 120 ist drehbeweglich, jedoch axial unbeweglich in Bezug auf das Bremsgehäuse 80, wodurch die zuvor genannten Axialkräfte sicher abgestützt bzw. in das Bremsgehäuse 80 abgeleitet werden.

Das Nachstellelement 104 ist fest und insbesondere drehfest mit der Rückstellerwelle 120 verbunden. Das Antriebselement 102 hingegen ist drehbeweglich auf der Rückstellerwelle 120 gelagert.

An ihrem der Bremsscheibe 82 abgewandten Ende ist die Rückstellerwelle 120 mit einem Mehrkant 118 als Schlüsselfläche versehen. Daran lässt sich ein Werkzeug ansetzen, um durch Drehen der Rückstellerwelle 120 den Druckstempel 90 wieder vollständig in seine Ausgangsposition zurückzustellen, was üblicherweise beim Austausch verbrauchter Bremsbeläge 84 gegen neue Bremsbeläge 84 erfolgt. Spätestens vor dem Austausch alter gegen neue Bremsbeläge 84 muss der Druckstempel 90 manuell in seine Ausgangsstellung zurückgefahren werden. Hierzu wird die Rückstellerwelle 120 und damit zugleich das Nachstellelement 104 und der Druckstempel 90 in einem Drehsinn gedreht, der entgegengesetzt der bei der Nachstellung sukzessive eintretenden Drehrichtung ist.

Die Drehbewegung beim Zurückstellen wird nicht auf das Antriebselement 102 übertragen, da sich ein Wendelabschnitt der Schlingfeder 106 in diesem Fall verkleinert, und dieser Wendelabschnitt im Nachstellelement 104 nach Art eines Freilaufs durchrutscht.

Die der Drehübertragung zwischen Antriebselement 102 und Nachstellelement 104 dienende Schlingfeder 106 kann in sich die Funktionen einer Einwegekupplung mit der Funktion einer Überlastkupplung vereinen. Einzelheiten der Schlingfeder 106 und ihrer Funktion sind in der Patentanmeldung WO 2015/117601 A1 beschrieben.

Die Rückstellerwelle 120 ist gegenüber dem Bremsgehäuse 80 zweifach abgestützt, und zwar jeweils mittelbar. Die erste Abstützung erfolgt über das Nachstellelement 104, welches seinerseits in dem Druckstempel 90 geführt ist, der wiederum, über die Gewindeverbindung 92, in dem gegenüber dem Bremssattel geführten Druckstück 94 abgestützt ist. Die zweite Abstützung erfolgt an dem anderen, d. h. dem bremsscheibenabgewandten Ende. Dort ist die Rückstellerwelle 120 mittelbar über einen Lagerkupplungsring 10 in einer runden Öffnung 80A des Bremsgehäuses 80 abgestützt.

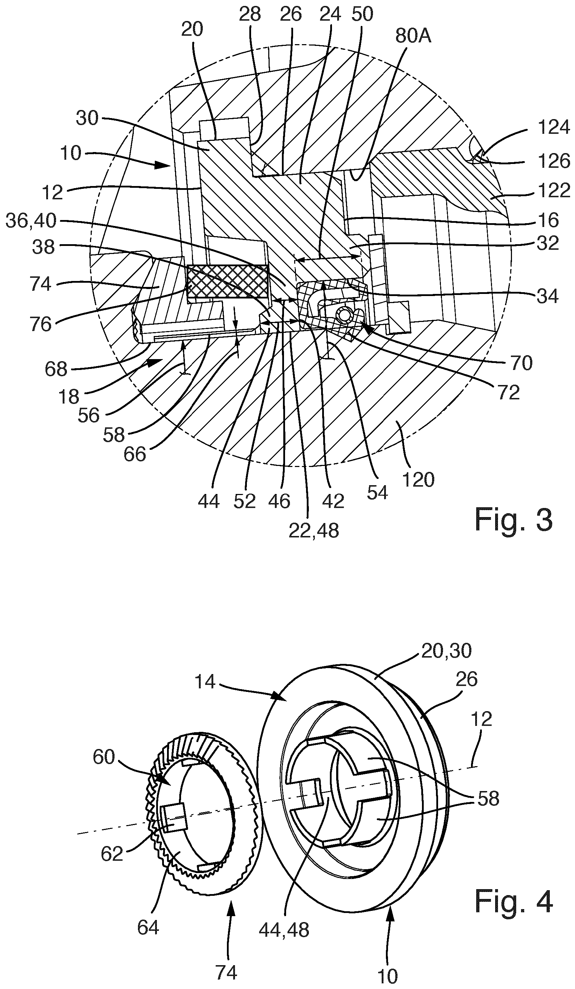

Der Lagerkupplungsring 10 erstreckt sich gemäß Fig. 4 entlang einer Ringachse 12, welche im montierten Zustand koaxial zur Achse A verläuft. Der Lagerkupplungsring 10 ist einstückig als Dreh- oder Sinterteil ausgebildet und aus einem Metall, insbesondere Aluminium oder Messing, hergestellt. Vorzugsweise besteht der Lagerkupplungsring 10 ausschließlich aus Aluminium, mit Ausnahme eines angeordneten Dichtmittels. Der Lagerkupplungsring 10 weist eine im montierten Zustand zur Bremsscheibe 82 zugewandte Bremsseite 14 und eine der Bremsscheibe 82 abgewandte Werkzeugseite 16 auf. Der Lagerkupplungsring 10 weist eine zentrale Ausnehmung 18 auf, welche sich entlang der Ringachse 12 zwischen der Bremsseite 14 und der Werkzeugseite 16 erstreckt. Demnach weist der Lagerkupplungsring 10 eine Ringmantelseite 20 und eine Ringinnenseite 22 auf, wobei die Ringinnenseite 22 an die Ausnehmung 18 anschließt und der Ringachse 12 zugewandt ist und die Ringmantelseite 20 der Ringachse 12 abgewandt ist.

Der Lagerkupplungsring 10 weist gemäß Fig. 3 und 4 an der Ringmantelseite 20 einen Fixierabschnitt 24 mit einer radialen Fixierabstützung 26 auf und mit einer ersten axialen Anschlagfläche 28. Der Lagerkupplungsring 10 stützt sich in Bezug auf die Ringachse 12 radial außen gegenüber dem Bremsgehäuse 80, insbesondere ausschließlich, über die radiale Fixierabstützung 26 axial reibschlüssig und/oder über die erste axiale Anschlagfläche 28 axial formschlüssig ab.

Der Fixierabschnitt 24 steht gemäß Fig. 3 gegenüber einem Basisabschnitt 30 des Lagerkupplungsrings 10 in Bezug auf die Ringachse 12 radial nach innen zurück. Die radiale Fixierabstützung 26 ist dabei an dem radial äußeren Ende des Fixierabschnitts 24 angeordnet. Die radiale Fixierabstützung 26 erstreckt sich parallel zur Ringachse 12. Zudem steht der Basisabschnitt 30 an der Bremsseite 14 axial gegenüber dem Fixierabschnitt 24 hervor. An einer senkrecht zur radialen Fixierabstützung 26 verlaufenden Seite des Basisabschnitt 30 ist die erste axiale Anschlagfläche 28 angeordnet. Die erste axiale Anschlagfläche 28 erstreckt sich senkrecht zur Ringachse 12 und ist der Werkzeugseite 16 zugewandt.

An den Fixierabschnitt 24 schließt gemäß Fig. 3 radial innen ein erster Aufnahmeabschnitt 32 mit einer ersten Aufnahmefläche 34 an. Der Fixierabschnitt 24 Basisabschnitt 30 ist vorzugsweise zwischen dem ersten Aufnahmeabschnitt 32 und dem Basisabschnitt 30 angeordnet. Die erste Aufnahmefläche 34 ist der Ringachse 12 zugewandt und ist um die Ringachse 12 vollständig umlaufend ausgebildet. Der erste Aufnahmeabschnitt 32 steht gegenüber dem Fixierabschnitt 24 an der Werkzeugseite 16 axial hervor. Die erste Aufnahmefläche 34 verläuft parallel zur Ringachse 12.

Die axiale Breite des Basisabschnitts 30 ist vorzugsweise kleiner als die axiale Breite des Fixerabschnitts 24 und/oder die axiale Breite des ersten Aufnahmeabschnitts 32.

An den ersten Aufnahmeabschnitt 32 schließt gemäß Fig. 3 radial innen ein Verbindungsabschnitt 36 mit einem Verjüngungsabschnitt 38 und einem Stegabschnitt 40 an. Demnach sind die erste Aufnahmefläche 34 und die zweite Aufnahmefläche 48 unmittelbar miteinander verbunden, was in Bezug auf die Nachstellung eine hohe relative Genauigkeit mit sich bringt. Ein axiales Verschieben zwischen dem Fixierabschnitt 24 und dem Verjüngungsabschnitts 38, von dem sich Kupplungsklauen 58 erstrecken, wird so entgegengewirkt. Der Verbindungsabschnitt 36 weist eine zweite axiale Anschlagfläche 42 auf, welche der Werkzeugseite 16 zugewandt ist und senkrecht zur Ringachse 12 verläuft. Der Verbindungsabschnitt 36 verbindet den ersten Aufnahmeabschnitt 32 und einen zweiten Aufnahmeabschnitt 44. Der Verjüngungsabschnitt 38 schließt an den zweiten Aufnahmeabschnitt 44 an. Der Stegabschnitt 40 schließt an den ersten Aufnahmeabschnitt 32 an. Der Verbindungsabschnitt 36 weist eine parallel zur Ringachse 12 verlaufende Abschnittsbreite 46 auf, welche im Verjüngungsabschnitt 38 sich ausgehend vom zweiten Aufnahmeabschnitt 44 hin zum Stegabschnitt 40 verjüngt. Die Abschnittsbreite 46 ist im Stegabschnitt 40 konstant.

Der zweite Aufnahmeabschnitt 44 verläuft gemäß Fig. 4 vollständig um die Ringachse 12. Der zweite Aufnahmeabschnitt 44 ist ringförmig ausgebildet. Der zweite Aufnahmeabschnitt 44 weist eine zur Ringachse 12 zugewandte zweite Aufnahmefläche 48 auf. Die zweite Aufnahmefläche 48 stützt sich im montierten Zustand an der Rückstellerwelle 120 ab. Demnach wird neben den Klaueninnenseiten 68 der partiellen Kupplungsklauen 58 eine große und um die Rückstellerwelle 120 geschlossene Kontaktfläche für die Lagerung der Rückstellerwelle 120 bereitgestellt. Die axiale Aufnahmelänge 52 der zweiten Aufnahmefläche 48 beträgt zwischen 1:2 und 1:5 vorzugsweise zwischen 1:3 und 1:4 der axialen Länge der Kupplungsklauen 65. Zudem weist der Lagerkupplungsring 10 in Summe eine höhere Stabilität und/oder Steifigkeit auf. Dies wirkt sich positiv auf die Genauigkeit der Lüftspieleinstellung aus.

Die erste Aufnahmefläche 34 weist gemäß Fig. 3 eine parallel zur Ringsachse 12 verlaufende erste Aufnahmelänge 50 und die zweite Aufnahmefläche 48 eine parallel zur Ringsachse 12 verlaufende zweite Aufnahmelänge 52 auf, wobei ein Verhältnis zwischen der ersten Aufnahmelänge 50 und der zweiten Aufnahmelänge 52 im Bereich zwischen 4:1 und 1:1, insbesondere 3:1 und 2:1, liegt.

Die erste Aufnahmefläche 34 und die zweite Aufnahmefläche 48 sind gemäß Fig. 3 in Bezug auf die Ringachse 12 radial zueinander beabstandet und schließen axial aneinander an. Die erste Aufnahmefläche 34 weist einen ersten Aufnahmedurchmesser 54 und die zweite Aufnahmefläche 48 einen zweiten Aufnahmedurchmesser 56 auf, wobei der erste Aufnahmedurchmesser 54 größer als der zweite Aufnahmedurchmesser 56 ausgebildet ist.

Alle zuvor beschriebenen Elemente des Lagerkupplungsrings 10 sind vorzugsweise rotationssymmetrisch ausgebildet.

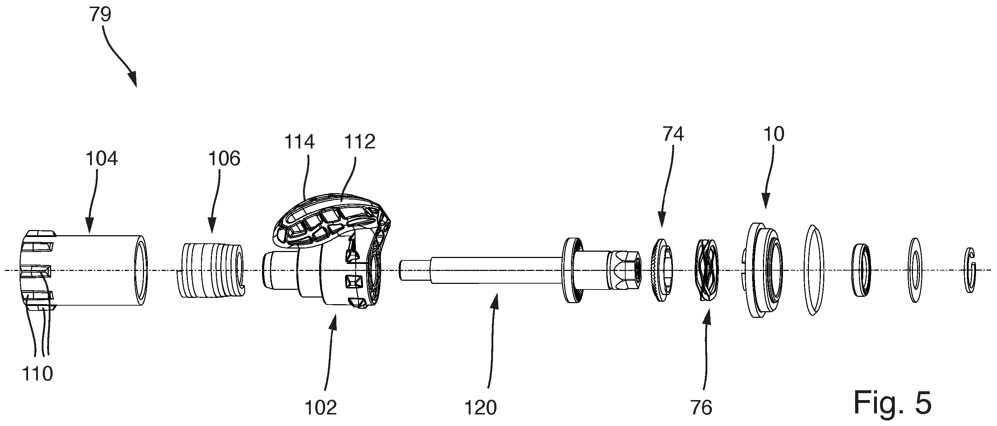

An den zweiten Aufnahmeabschnitt 44 schließen gemäß Fig. 4 und 5 mehrere, insbesondere vier, Kupplungsklauen 58 an. Die Kupplungsklauen 58 erstrecken sich parallel zur Ringachse 12 und stehen gegenüber dem zweiten Aufnahmeabschnitt 44 axial hervor. Die Kupplungsklauen 58 sind an der Ringinnenseite 22 bündig zur zweiten Aufnahmefläche 48 ausgebildet. Demnach wird durch die Kupplungsklauen 58 die zweite Aufnahmefläche 48 abschnittsweise axial verlängert. Demnach wird eine große Kontaktfläche durch die zweite Aufnahmefläche 48 und die Kupplungsklauen 58 für die Rückstellerwelle 120 bereitgestellt, wodurch ein gutes Gleitverhalten bei geringer Verschleißanfälligkeit erzielt wird. Aufgrund des zweiten Aufnahmeabschnitts 44 wird einem Aufspreizen der Kupplungsklauen 58 entgegengewirkt.

Die Kupplungsklauen 58 weisen gemäß Fig. 3 an einer der Ringachse 12 zugewandten Klaueninnenseite 68 eine zylindrische Innenkontur auf, sodass sich auch hier eine flächige Abstützung auf der Rückstellerwelle 120 ergibt.

Zwei benachbarte Kupplungsklauen 58 sind gemäß Fig. 4 jeweils durch eine Lücke voneinander getrennt. Im Bereich einer Lücke wird die zweite Aufnahmefläche 48 nicht axial verlängert.

Die Kupplungsklauen 58 weisen gemäß Fig. 3 jeweils eine senkrecht zur Ringachse 12 verlaufende Klauenbreite 66 auf, wobei die Abschnittsbreite 46 des Verbindungsabschnitts 36 größer als die Klauenbreite 66 der Kupplungsklauen 58 ausgebildet ist. Alle Kupplungsklauen 58 weisen vorzugsweise dieselbe Klauenbreite 66 auf.

Die Kupplungsklauen 58 und dazwischen vorgesehenen Lücken bilden Formschlusselemente, durch die eine drehfeste Verbindung des Lagerkupplungsrings 10 mit einem separaten Gegenkupplungsring 74 gemäß Fig. 4 erzielbar ist. Hierzu ist der Gegenkupplungsring 74 an seiner Ringöffnung 60 mit korrespondierenden Formschlusselementen versehen, nämlich mit abwechselnd zu der Achse A bzw. Ringachse des Lagerkupplungsrings 10 vorspringenden ersten Umfangsabschnitten 62 und demgegenüber zurückspringenden zweiten Umfangsabschnitten 64, die einander abwechseln. Erzielt wird dadurch eine reine Drehkopplung, die also eine freie Längsbewegung des Gegenkupplungsrings 74 gegenüber dem Lagerkupplungsrings 10 zulässt. Der Gegenkupplungsring 74, insbesondere die ersten Umfangsabschnitte 62, ist im montierten Zustand in Richtung des zweiten Aufnahmeabschnitts 44 gegen eine in Fig. 3 nicht dargestellte Wellenfeder 76 verschiebbar.

Ferner ist gemäß Fig. 3 an der zweiten axialen Anschlagfläche 42, der zweiten Aufnahmefläche 48 und der Rückstellerwelle 120 ein Radialwellendichtring 70 mit einer Dichtlippe 72 angeordnet. Der Radialwellendichtring 70 stützt sich an der ersten Aufnahmefläche 34 und gegenüber der zweiten axialen Anschlagfläche 42 ab. Die Dichtlippe 72 ist vorzugsweise in Bezug auf die Ringachse 12 umlaufend auf der Rückstellerwelle 120 angeordnet. Bei dem Radialwellendichtring 70 handelt es sich um ein auswechselbares Standardbauteil und ist damit wartungsfreundlich. Zudem ist der Radialwellendichtring durch den radialen Abstand zwischen der ersten Aufnahmefläche 34 und der zweiten Aufnahmefläche 48 von der Werkzeugseite 16 axial zugänglich.

Ein Federelement 78, welches als Wellenfeder 76 gestaltet ist, stützt sich gemäß Fig. 2 und 5 einerseits gegen den Lagerkupplungsring 10, insbesondere den Verbindungsabschnitt 36 und/oder zweiten Aufnahmeabschnitt 44, ab, und andererseits gegen den Gegenkupplungsring 74, der zu diesem Zweck mit einer umlaufenden Stufe versehen ist, die die Wellenfeder 76 teilweise aufnimmt und bezüglich der Achse A zentriert. Zur weiteren Erläuterung des Federelements 78, dessen Anordnung zwischen dem Lagerkupplungsring 10 und dem Gegenkupplungsring 74, und den zahnförmigen Kupplungsstrukturen des Gegenkupplungsrings 74 und eines an der Rückstellerwelle 120 angeordneten Bunds wird auf die Absätze [0046] bis [0055] sowie Fig. 4 und 5 der DE 10 2016 105 611 verwiesen.

Zur axialen Festlegung der Rückstellerwelle 120 an dem Lagerkupplungsring 10 stützt sich der Fixierabschnitt 24 und/oder der erste Aufnahmeabschnitt 32 gegen eine Ringscheibe ab, die wiederum durch einen Sicherungsring gesichert ist, welcher in einer Nut auf dem Außenumfang der Rückstellerwelle 120 sitzt.

Eine aus einem Weichkunststoff bestehende Kappe 122 lässt sich von außen auf die Gehäuseöffnung 80A aufsetzen, um diese zusätzlich zu verschließen. Zudem trägt die Kappe 122 dazu bei, ein Eindringen von Feuchtigkeit und Staub in den Bereich der Drehlagerung und ebenso in den Bereich der Nachstellung zu verhindern. Die Kappe 122 kann vorzugsweise ein Außengewinde aufweisen, welches in ein korrespondierendes Innengewinde in der Gehäuseöffnung 80A eingeschraubt wird. Die eingeschraubte Kappe 122 setzt einen weiteres Dichtmittel, insbesondere einen O-Ring 124, vorzugsweise aus einem nachgiebigen Material, in einer Gehäusefase 126 der Gehäuseöffnung 80A fest, wodurch das weitere Dichtmittel zuverlässig zwischen dem Bremsgehäuse 80 und der Kappe 122 abdichtet. Die Gehäusefase 126 ist vorzugsweise um die Achse A umlaufend angeordnet.

### Bezugszeichenliste

| | | | |
|---|---|---|---|
| 10 | Lagerkupplungsring | 68 | Klaueninnenseite |
| 12 | Ringachse | 70 | Radialwellendichtring |
| 14 | Bremsseite | 72 | Dichtlippe |
| 16 | Werkzeugseite | 74 | Gegenkupplungsring |
| 18 | Ausnehmung | 76 | Wellenfeder |
| 20 | Ringmantelseite | 78 | Federelement |
| 22 | Ringinnenseite | 79 | Scheibenbremse |
| 24 | Fixierabschnitt | 80 | Bremsgehäuse |
| 26 | radiale Fixierabstützung | 80A | Öffnung |
| 28 | erste axiale | 82 | Bremsscheibe |
| | Anschlagfläche | 84 | Bremsbelag |
| 30 | Basisabschnitt | 86 | Belagrückenplatte |
| 32 | erster Aufnahmeabschnitt | 88 | Reibbelag |
| 34 | erste Aufnahmefläche | 90 | Druckstempel |
| 36 | Verbindungsabschnitt | 92 | Gewindeverbindung |
| 38 | Verjüngungsabschnitt | 94 | Druckstück |
| 40 | Stegabschnitt | 96 | Zuspannhebel |
| 42 | zweite axiale | 98 | Hebelarm |
| | Anschlagfläche | 100 | Hohlraum |
| 44 | zweiter | 102 | Antriebselement |
| | Aufnahmeabschnitt | 104 | Nachstellelement |
| 46 | Abschnittsbreite | 106 | Schlingfeder |
| 48 | zweite Aufnahmefläche | 108 | Längsnuten |
| 50 | erste Aufnahmelänge | 110 | Nasen |
| 52 | zweite Aufnahmelänge | 112 | Kulisse |
| 54 | erster | 114 | Arm |
| | Aufnahmedurchmesser | 116 | Zapfen |
| 56 | zweiter | 118 | Mehrkant |
| | Aufnahmedurchmesser | 120 | Rückstellerwelle |
| 58 | Kupplungsklaue | 122 | Kappe |
| 60 | Ringöffnung | 124 | O-Ring |
| 62 | erster Umfangsabschnitt | 126 | Gehäusefase |
| 64 | zweiter Umfangsabschnitt | | |
| 66 | Klauenbreite | | |

## Patentansprüche

1. Lagerkupplungsring (10) zum Lagern einer Rückstellerwelle (120) einer Scheibenbremse (79), wobei der Lagerkupplungsring (10) sich um eine Ringachse (12) erstreckt, wobei der Lagerkupplungsring (10) umfasst:
- eine der Ringachse (12) abgewandte Ringmantelseite (20) und eine der Ringachse (12) zugewandte Ringinnenseite (22),
- eine an der Ringmantelseite (20) angeordnete radiale Fixierabstützung (26),
- eine an der Ringmantelseite (20) angeordnete erste axiale Anschlagfläche (28),
- eine an der Ringinnenseite (22) angeordnete und um die Ringachse (12) umlaufende erste Aufnahmefläche (34),
- eine an der Ringinnenseite (22) angeordnete zweite axiale Anschlagfläche (42), und
- mehrere axiale Kupplungsklauen (58),
**dadurch gekennzeichnet,**
**dass** der Lagerkupplungsring (10) ferner umfasst:
- eine an der Ringinnenseite (22) angeordnete und um die Ringachse (12) umlaufende zweite Aufnahmefläche (48), wobei die zweite Aufnahmefläche (48) beabstandet zur ersten Aufnahmefläche (34) ausgebildet ist,
**dass** die Kupplungsklauen (58) die zweite Aufnahmefläche (48) abschnittweise axial verlängert, und
**dass** der Lagerkupplungsring (10) einstückig ausgebildet ist.

2. Lagerkupplungsring (10) nach Anspruch 1, wobei der Lagerkupplungsring (10) als ein Drehteil oder als ein Sinterteil ausgebildet ist.

3. Lagerkupplungsring (10) nach Anspruch 1 oder 2, wobei der Lagerkupplungsring (10) aus Metall, insbesondere aus Aluminium, hergestellt ist und/oder besteht.

4. Lagerkupplungsring (10) nach einem der vorherigen Ansprüche, wobei die erste Aufnahmefläche (34) einen ersten Aufnahmedurchmesser (54) und die zweite Aufnahmefläche (48) einen zweiten Aufnahmedurchmesser (56) aufweist, und wobei der zweite Aufnahmedurchmesser (56) größer als der erste Aufnahmedurchmesser (54) ist.

5. Lagerkupplungsring (10) nach einem der vorherigen Ansprüche, wobei in Bezug auf die Ringachse (12) die erste Aufnahmefläche (34) axial an die zweite Aufnahmefläche (48) anschließt, und/oder wobei in Bezug auf die Ringachse (12) die erste Aufnahmefläche (34) und die zweite Aufnahmefläche (48) radial beabstandet zueinander angeordnet sind.

6. Lagerkupplungsring (10) nach einem der vorherigen Ansprüche, wobei der Lagerkupplungsring (10) einen die erste Aufnahmefläche (34) und die zweite Aufnahmefläche (48) und/oder die Fixierabstützung (26) verbindenden Verbindungsabschnitt (36) mit einer parallel zur Ringachse (12) verlaufenden Abschnittsbreite (46) aufweist.

7. Lagerkupplungsring (10) nach Anspruch 6, wobei die Kupplungsklauen (58) eine senkrecht zur Ringachse (12) verlaufende Klauenbreite (66) aufweisen, und wobei die Abschnittsbreite (46) größer als die Klauenbreite (66) ist.

8. Lagerkupplungsring (10) nach Anspruch 6 oder 7, wobei die Abschnittsbreite (46) des Verbindungsabschnitts (36) in Bezug auf die Ringachse (12) einen Verjüngungsabschnitt (38) und/oder einen Stegabschnitt (40) aufweist, und wobei die Abschnittsbreite (46) im Verjüngungsabschnitt (38) nach radial außen abnimmt und/oder im Stegabschnitt (40) konstant ist.

9. Lagerkupplungsring (10) nach einem der vorherigen Ansprüche, wobei die erste axiale Anschlagfläche (28) an die radiale Fixierabstützung (26) anschließt, und/oder wobei die zweite axiale Anschlagfläche (42) an die erste Aufnahmefläche (34) und/oder die zweite Aufnahmefläche (48) anschließt.

10. Lagerkupplungsring (10) nach einem der vorherigen Ansprüche, wobei die erste Aufnahmefläche (34) eine parallel zur Ringachse (12) verlaufende erste Aufnahmelänge (50) und die zweite Aufnahmefläche (48) eine parallel zur Ringachse (12) verlaufende zweite Aufnahmelänge (52) aufweist, wobei ein Verhältnis zwischen der ersten Aufnahmelänge (50) und der zweiten Aufnahmelänge (52) in einem Bereich zwischen 4:1 und 1:1, insbesondere zwischen 3:1 und 2:1, liegt.

11. Nach- und/oder Rücksteller einer Scheibenbremse (79) mit einem Lagerkupplungsring (10) nach einem der vorherigen Ansprüche.

12. Nach- und/oder Rücksteller nach Anspruch 11, wobei die Nach- und/oder Rücksteller eine Rückstellerwelle (120) aufweist, und wobei sich die Rückstellerwelle (120) auf die Klauenkupplungen und auf der zweiten Aufnahmefläche (48) abstützt.

13. Nach- und/oder Rücksteller nach Anspruch 12, wobei die Nach- und/oder Rücksteller ein Radialwellendichtring (70) mit einer Dichtlippe (72) aufweist, und wobei sich der Radialwellendichtring (70) an der ersten Aufnahmefläche (34) und gegenüber der zweiten axialen Anschlagfläche (42) abstützt, und/oder wobei die Dichtlippe (72) in Bezug auf die Ringachse (12) umlaufend auf der Rückstellerwelle (120) angeordnet ist.

14. Scheibenbremse mit einem Nach- und/oder Rücksteller nach einem der Ansprüche 11 bis 13 oder einem Lagerkupplungsring (10) nach einem der Ansprüche 1 bis 10.

15. Scheibenbremse (79) nach Anspruch 14, wobei die Scheibenbremse (79) ein Bremssattelgehäuse (80) aufweist, und wobei sich der Lagerkupplungsring (10) in Bezug auf die Ringachse (12) radial außen gegenüber dem Bremssattelgehäuse (80), insbesondere ausschließlich, über die Fixierabstützung (26) axial reibschlüssig und/oder über die erste axiale Anschlagfläche (28) axial formschlüssig abstützt.

16. Kupplungssystem mit einem Lagerkupplungsring (10) nach einem der Ansprüche 1 bis 10 und mit einem mit dem Lagerkupplungsring (10) zusammenwirkenden Gegenkupplungsring (74).
